# EUROPÄISCHE PATENTSCHRIFT

(11) **EP 4 043 269 B1**
(45) Veröffentlichungstag und Bekanntmachung des Hinweises auf die Patenterteilung: **23.08.2023**
(21) Anmeldenummer: 22155771.3
(22) Anmeldetag: 09.02.2022
(51) Int. Cl.: B60L 5/39, B60L 5/08, B60L 5/12, B60M 1/30, B61C 3/00

(54) **STROMABNEHMER FÜR EIN FAHRZEUG**
CURRENT COLLECTOR FOR A VEHICLE
COLLECTEUR DE COURANT POUR UN VÉHICULE

(30) Priorität: 16.02.2021 AT 500992021
(43) Veröffentlichungstag der Anmeldung: 17.08.2022
(73) Patentinhaber: Siemens Mobility Austria GmbH, 1210 Wien (AT)
(72) Erfinder: Kitzmüller, Andreas, 8010 Graz (AT); Tropper, Georg, 8430 Leitring (AT); Wechtitsch, Markus, 8502 Lannach (AT)
(74) Vertreter: Siemens Patent Attorneys

(56) Entgegenhaltungen:
- EP-A2- 1 120 306
- CN-U- 208 263 984
- DE-A1-102013 207 824
- GB-A- 951 133
- US-A- 5 180 041
- US-A1- 2013 081 915

## Beschreibung

Die Erfindung betrifft einen Stromabnehmer für ein Fahrzeug, insbesondere für ein Schienenfahrzeug, mit einer Betätigungsvorrichtung, mit einem mit einem Fahrzeug verbindbaren ersten Träger sowie mit einem zwischen einer ersten Endlage und einer zweiten Endlage eines Gleitstücks beweglich mit dem ersten Träger verbundenen zweiten Träger, mit welchem das Gleitstück verbunden ist, wobei die Betätigungsvorrichtung einen mit dem ersten Träger verbundenen Aktuator, einen mit dem ersten Träger verbundenen Kraftübersetzer, mit welchem der Aktuator gekoppelt ist, sowie ein mit dem zweiten Träger verbundenes Kontaktstück aufweist, auf welchem der Kraftübersetzer geführt ist, wobei das Gleitstück mittels eines auf den Kraftübersetzer wirkenden ersten Drehmoments, welches aus einer ersten Aufstandskraft zwischen dem Kraftübersetzer und dem Kontaktstück gebildet ist, in der ersten Endlage gesichert gehalten ist, wobei das erste Drehmoment gegen eine Bewegung des Gleitstücks aus der ersten Endlage wirkend ausgebildet ist.

Stromabnehmer, deren Gleitstücke mit Stromversorgungsvorrichtungen wie z.B. Stromschienen in Verbindung gebracht werden, um Fahrzeuge mit Elektrizität zu versorgen, müssen von den Stromversorgungsvorrichtungen trennbar ausgeführt sein, um das Fahrzeug von dessen Versorgung mit Elektrizität trennen zu können. Für eine Durchführung von Anlegevorgängen der Stromabnehmer an die Stromversorgungsvorrichtungen und Trennvorgängen der Stromabnehmer von den Stromversorgungsvorrichtungen sind häufig Betätigungsvorrichtungen der Stromabnehmer vorgesehen.

Aus dem Stand der Technik ist die EP 3 587 165 A1 bekannt, in welcher ein Stromabnehmer für ein Fahrzeug mit einem Stromabnehmerarm und einem mit dem Stromabnehmerarm verbundenen Gleitstück beschrieben ist. Das Gleitstück kann mittels einer Betätigungsvorrichtung an eine Stromschiene angelegt oder von dieser abgehoben werden. Die Betätigungsvorrichtung weist Wellen, eine Hebelvorrichtung sowie eine Stange auf, wodurch ein in die Betätigungsvorrichtung zur Betätigung des Stromabnehmerarms eingeleitetes Drehmoment umgelenkt werden kann.

Weiterhin zeigt die CN 204 845 580 U einen Stromabnehmer mit einem ersten Träger, einem beweglich mit dem ersten Träger verbundenen zweiten Träger, einem Gleitstück und einer Betätigungsvorrichtung. Die Betätigungsvorrichtung umfasst einen mit dem ersten Träger verbundenen Zylinder, eine drehbar mit dem ersten Träger verbundene Drehplatte sowie ein Kontaktstück, das mit dem zweiten Träger verbunden ist. Eine Kolbenstange ist mit einem ersten Hebelarm der Drehplatte verbunden. Ein zweiter Hebelarm der Drehplatte kontaktiert das Kontaktstück, wodurch Betätigungskräfte von dem Zylinder auf den zweiten Träger übertragen werden können und der zweite Träger mit Gleitstück ausgelenkt werden kann.

Ferner beschreibt die CN 208 263 984 U einen Seitenstromabnehmer, bei welchem ein schwenkbar und über Federn mit einem Träger verbundenes Gleitstück über einen Aktuator mit einem Zylinder und einem Kolben an eine Stromschiene angelegt und davon abgelegt werden kann. Über einen Kraftübersetzer erfolgt eine Kraftübertragung von dem Kolben auf ein Kontaktelement, welches mit einem Schwenkarm verbunden ist, welcher wiederum mit dem Gleitstück gekoppelt ist.

Weiterhin ist in der DE 10 2013 207 824 A1 ein Stromabnehmer für ein Fahrzeug offenbart, welcher eine Andruckvorrichtung mit einer Federvorrichtung aufweist, über welche ein Schleifstück des Stromabnehmers gegen eine Stromschiene gedrückt werden kann, wobei Bewegungen der Federvorrichtung mittels einer Dämpfungsvorrichtung der Andruckvorrichtung gedämpft werden können.

Darüber hinaus zeigt die US 5,180,041 A einen Stromabnehmer für ein Transportfahrzeug, bei welchem Gleitstücke über gelenkig gelagerte Stützarme einer Stützvorrichtung an eine Stromschiene angelegt werden können. Mittels Rückstellfedern kann die Stützvorrichtung in eine neutrale Position zurückgeführt werden.

Der Erfindung liegt die Aufgabe zugrunde, einen gegenüber dem Stand der Technik weiterentwickelten Stromabnehmer mit einer Endlagensicherung anzugeben, welche ein definiertes Ein- und Ausschalten des Aktuators ermöglicht.

Erfindungsgemäß wird diese Aufgabe gelöst mit einem Stromabnehmer gemäß Anspruch 1, bei dem zumindest eine Verriegelungsfeder mit dem Kraftübersetzer sowie mit dem ersten Träger verbunden ist, wobei die zumindest eine Verriegelungsfeder und der Kraftübersetzer in einer Weise eingestellt sind, dass bei Bewegung des Kraftübersetzers eine Federspannung der zumindest einen Verriegelungsfeder zuerst vergrößert wird und dann, wenn eine definierte Federauslenkung der Verriegelungsfeder erreicht ist, verkleinert wird, wenn das Gleitstück von der ersten Endlage in die zweite Endlage oder von der zweiten Endlage in die erste Endlage bewegt wird.

Dadurch wird eine einfache und zugleich robuste Endlagensicherung des Stromabnehmers erreicht. In der ersten Endlage kann das Gleitstück beispielsweise an eine Stromversorgungsvorrichtung (z.B. eine Stromschiene) angelegt und in der zweiten Endlage von der Stromversorgungsvorrichtung getrennt sein.

Der Aktuator muss in einem eingeschalteten Zustand lediglich eine definierte Kraft aufbringen, um das Gleitstück aus der zweiten Endlage herauszubewegen und kann, wenn das Gleitstück in der ersten Endlage angekommen ist, ausgeschaltet werden. Dadurch wird der Aktuator entlastet und muss nicht betriebliche Belastungen (z.B. stoßartige Belastungen auf das Gleitstück aufgrund von Lagefehlern der Stromschiene) kompensieren. Es ist also nicht erforderlich, dass der Aktuator eingeschaltet bleibt, um die erste Endlage zu halten. Dadurch wird ein Verschleiß des Aktuators reduziert und dessen Dichtheit bleibt über eine lange Zeit erhalten, wodurch eine hohe Lebensdauer des Aktuators erreicht wird. Zugleich wird das Gleitstück aufgrund des ersten Drehmoments zuverlässig in der ersten Endlage gehalten. Starke Auslenkungen des Gleitstücks aus der ersten Endlage in die zweite Endlage sind nur durch Aktivierung des Aktuators und nicht durch betriebliche Belastungen (z.B. die bereits oben genannten stoßartigen Belastungen auf das Gleitstück aufgrund von Lagefehlern der Stromschiene) möglich.

Auf Verschlüsse zur Verriegelung des Aktuators oder des Kraftübersetzers (z.B. Klinkenverschlüsse etc.) kann verzichtet werden. Diese können zwar als Redundanz vorgesehen sein, sind jedoch nicht zwingend erforderlich.

Durch diese Maßnahme wird weiterhin eine redundante Endlagensicherung des Gleitstücks in der ersten Endlage bzw. in der zweiten Endlage erzielt.

Um das Gleitstück beispielsweise aus der ersten Endlage herauszubewegen, wird von dem Aktuator eine Kraft aufgebracht, mittels welcher die Verriegelungsfeder gespannt wird. Diese Kraft wirkt auf den Kraftübersetzer. Eine Bewegung des Kraftübersetzers führt aufgrund dessen Verbindung mit dem zweiten Träger über das Kontaktstück das Gleitstück in die zweite Endlage über.

Dadurch, dass der Kraftübersetzer mit der Verriegelungsfeder gekoppelt ist, wird die Verriegelungsfeder bei der Bewegung des Kraftübersetzers gespannt. Während dieser Bewegung erreicht die Verriegelungsfeder eine maximale Federspannung, die jedoch nicht zwangsläufig einer Federspannung bei vollständiger Auslenkung der Verriegelungsfeder entsprechen muss. Nach Erreichen der maximalen Spannung, welche mit der definierten Federauslenkung korreliert, wird die Federspannung wieder verringert.

Erreicht das Gleitstück seine zweite Endlage, so entspricht das einer Lage der Verriegelungsfeder mit verringerter Federspannung, in welcher die Verriegelungsfeder völlig entspannt ist oder noch eine Restspannung aufweist.

Um das Gleitstück wieder aus der zweiten Endlage heraus- und in die erste Endlage überzuführen, wird mittels einer Betätigung des Aktuators die Verriegelungsfeder wieder gespannt. Während der Betätigung des Aktuators und einer Rückstellbewegung des zweiten Trägers in Richtung der ersten Endlage wird wieder die maximale Federspannung der Verriegelungsfeder erreicht. Bei einer weiteren Betätigung des Aktuators und einer Fortsetzung der Rückstellbewegung des zweiten Trägers in Richtung der ersten Endlage nimmt die Federspannung der Verriegelungsfeder wieder ab, d.h. die Verriegelungsfeder wird entspannt. In der ersten Endlage des zweiten Trägers bzw. des Gleitstücks ist Federspannung der Verriegelungsfeder verringert, wobei die Verriegelungsfeder völlig entspannt sein oder noch eine Restspannung aufweisen kann.

Weitere vorteilhafte Ausgestaltungen des erfindungsgemäßen Stromabnehmers ergeben sich aus den Unteransprüchen.

Günstig ist es beispielsweise, wenn das Gleitstück mittels eines auf den Kraftübersetzer wirkenden zweiten Drehmoments, welches aus einer zweiten Aufstandskraft zwischen dem Kraftübersetzer und dem Kontaktstück gebildet ist, in der zweiten Endlage gesichert gehalten ist, wobei das zweite Drehmoment gegen eine Bewegung des Gleitstücks aus der zweiten Endlage wirkend ausgebildet ist und das zweite Drehmoment eine Wirkrichtung aufweist, die jener des ersten Drehmoments entgegengesetzt ist.

Durch diese Maßnahme kann auf getrennte Sicherungsmittel für die erste Endlage und die zweite Endlage des Gleitstücks verzichtet werden. Für eine Endlagensicherung in der ersten Endlage bzw. in der zweiten Endlage des Gleitstücks sind lediglich ein betragsmäßig ausreichendes erstes Drehmoment bzw. zweites Drehmoment sowie eine Wirkrichtungsumkehr des ersten Drehmoments bzw. des zweiten Drehmoments erforderlich.

Eine vorteilhafte Ausgestaltung erhält man, wenn der Kraftübersetzer auf einer ersten Seite des ersten Trägers vorgesehen ist und die zumindest eine Verriegelungsfeder auf einer der ersten Seite gegenüberliegend angeordneten zweiten Seite des ersten Trägers vorgesehen ist, wobei der Kraftübersetzer und die zumindest eine Verriegelungsfeder über eine Öffnung des ersten Trägers miteinander verbunden sind.

Durch diese Maßnahme wird eine platzsparende Verteilung von Komponenten des Stromabnehmers auf dem ersten Träger und somit eine kompakte Bauweise des Stromabnehmers bewirkt. Bei Schienenfahrzeugen werden damit Risiken im Hinblick auf eine Verletzung eines Lichtraumprofils gesenkt.

Eine günstige Lösung wird erreicht, wenn der Kraftübersetzer einen ersten Hebelarm und einen zweiten Hebelarm, welche verschiedene Winkellagen aufweisen, umfasst, wobei der erste Hebelarm mit dem Aktuator verbunden ist und der zweite Hebelarm auf dem Kontaktstück geführt ist.

Ein Rollkontakt zwischen dem Kraftübersetzer und dem Kontaktstück wird bewirkt, wenn mit dem zweiten Hebelarm eine Walze verbunden ist, welche das Kontaktstück kontaktiert. Dadurch wird ein Gleitkontakt zwischen dem Kraftübersetzer bzw. dem zweiten Hebelarm und dem Kontaktstück vermieden.

Der Rollkontakt ermöglicht eine besonders leichtgängige Betätigung des Stromabnehmers. Die Walze rollt auf dem Kontaktstück ab und nutzt dieses nicht bzw. lediglich moderat ab. Es wird dadurch ein besonders wartungsarmer Stromabnehmer realisiert. Ein Verkeilen des Kraftübersetzers mit dem Kontaktstück wird vermieden.

Es ist günstig, wenn das Kontaktstück zumindest einen rampenförmigen Abschnitt umfasst.

Der Kraftübersetzer kontaktiert beispielsweise über den zweiten Hebelarm oder die Walze den Abschnitt des Kontaktstücks, wodurch dieses und somit der zweite Träger sowie das Gleitstück mit einem großen Hub ausgelenkt werden. Weiterhin werden aufgrund des rampenförmigen Abschnitts und dessen Kontakts mit dem Kraftübersetzer Bewegungen des Gleitstücks in die erste Endlage oder in die zweite Endlage verstärkt bzw. Rückstellbewegungen des Gleitstücks aus der ersten Endlage oder der zweiten Endlage erschwert. Dadurch wird eine weitere Redundanz in der Endlagensicherung des Gleitstücks erzielt.

Hilfreich ist es auch, wenn der Kraftübersetzer manuell betätigbar ausgeführt ist.

Beispielsweise kann auf dem Kraftübersetzer ein Anlegestück oder ein Adapter für ein Werkzeug (z.B. einen Schraubenschlüssel) vorgesehen sein. Dadurch ist, mittels des Werkzeugs, ein manuelles An- oder Ablegen des Gleitstücks an die oder von der Stromversorgungsvorrichtung möglich, wodurch beispielsweise ein Notbetrieb des Stromabnehmers bewerkstelligt werden kann.

Eine günstige Ausgestaltung erhält man, wenn eine Aktuatorlängsachse des Aktuators in allen Betriebszuständen des Aktuators geneigt bezüglich einer Trägerlängsachse des ersten Trägers ausgerichtet ist.

Ist der erste Träger beispielsweise quaderförmig oder annähernd quaderförmig ausgeführt und ist die Trägerlängsachse parallel zu einer Grundflächenseitenkante des ersten Trägers angeordnet, so kann durch eine derartige Schrägstellung des Aktuators eine verfügbare Fläche auf dem ersten Trägers zur Verbindung des Aktuators mit dem ersten Träger und mit dem Kraftübersetzer besser ausgenützt werden. Der erste Träger kann kompakter ausgeführt werden oder es kann ein größerer Aktuator eingesetzt werden.

Es ist ferner vorteilhaft, wenn der erste Träger und der zweite Träger federnd miteinander verbunden sind.

Durch diese Maßnahme wird nach Auslenkungen des zweiten Trägers aus der ersten Endlage, wie sie beispielsweise bei Höhenlageschwankungen der Stromversorgungsvorrichtung auftreten können, eine Rückstellung des zweiten Trägers in die erste Endlage gefördert.

Ein verschleiß- und somit wartungsarmer Betrieb des Aktuators wird mit einem Verfahren zur Betätigung eines Stromabnehmers mittels eines Aktuators, wobei mittels des Aktuators ein Gleitstück in eine erste Endlage oder in eine zweite Endlage bewegt wird, erreicht, bei dem der Aktuator ausgeschaltet wird, wenn das Gleitstück in der ersten Endlage oder in der zweiten Endlage angeordnet und darin gesichert gehalten ist. Nachfolgend wird die Erfindung anhand von Ausführungsbeispielen näher erläutert.

Es zeigen beispielhaft:
- Fig. 1:: Einen Seitenriss einer beispielhaften ersten Ausführungsvariante eines erfindungsgemäßen Stromabnehmers in einer angehobenen ersten Endlage eines Gleitstücks, wobei ein erster Träger gelenkig mit einem zweiten Träger verbunden ist,
- Fig. 2:: Einen Seitenriss einer beispielhaften zweiten Ausführungsvariante eines erfindungsgemäßen Stromabnehmers in einer angehobenen ersten Endlage eines Gleitstücks, wobei ein erster Träger über eine Linearführung mit einem zweiten Träger verbunden ist,
- Fig. 3:: Einen Seitenriss der beispielhaften zweiten Ausführungsvariante eines erfindungsgemäßen Stromabnehmers in einer abgesenkten zweiten Endlage des Gleitstücks,
- Fig. 4:: Einen Seitenriss einer Verriegelungseinrichtung einer beispielhaften Ausführungsvariante eines Stromabnehmers, wobei die Verriegelungseinrichtung in einer mit einer ersten Endlage des Stromabnehmers korrelierenden Lage ist,
- Fig. 5:: Einen Seitenriss einer Verriegelungseinrichtung einer beispielhaften Ausführungsvariante eines Stromabnehmers, wobei die Verriegelungseinrichtung in einer mit einer Zwischenlage zwischen einer ersten Endlage und einer zweiten Endlage des Stromabnehmers korrelierenden Lage ist,
- Fig. 6:: Einen Seitenriss einer Verriegelungseinrichtung einer beispielhaften Ausführungsvariante eines Stromabnehmers, wobei die Verriegelungseinrichtung in einer mit einer zweiten Endlage des Stromabnehmers korrelierenden Lage ist, und
- Fig. 7:: Ein Flussdiagramm zu einer beispielhaften Ausführungsvariante eines erfindungsgemäßen Verfahrens zur Betätigung eines Stromabnehmers.

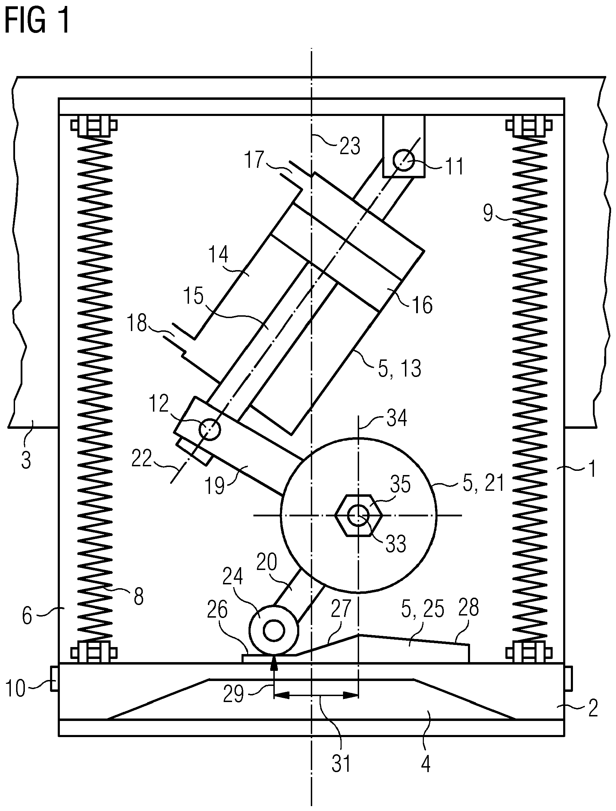

Eine in Fig. 1 als Seitenriss dargestellte, beispielhafte erste Ausführungsvariante eines erfindungsgemäßen Stromabnehmers eines Schienenfahrzeugs umfasst einen ersten Träger 1, welcher mit einem Fahrwerksrahmen 3 eines Fahrwerks des Schienenfahrzeugs verschraubt ist, einen zweiten Träger 2 mit einem darauf gelagerten Gleitstück 4 sowie eine Betätigungsvorrichtung 5.

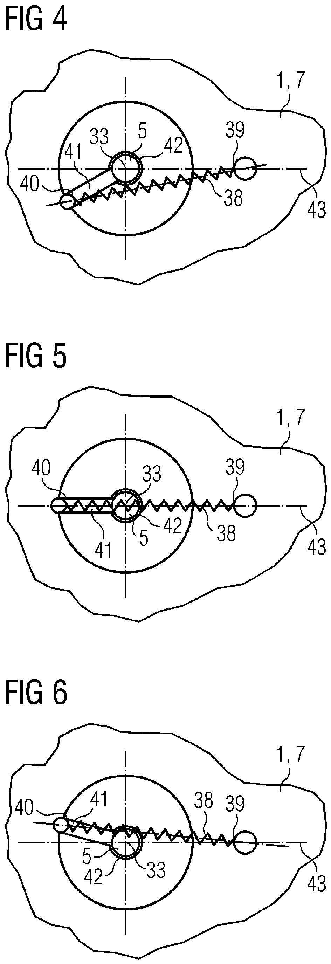

Der erste Träger 1 ist quaderförmig ausgeführt. Der zweite Träger 2 mit dem Gleitstück 4 ist im Bereich einer ersten Seite 6 des ersten Trägers 1, seiner Vorderseite, vorgesehen. Über eine in beispielhaft in Fig. 4, Fig. 5 und Fig. 6 sichtbare zweite Seite 7 des ersten Trägers 1, seiner Rückseite, ist dieser mit dem Fahrwerksrahmen 3 verbunden.

Der erste Träger 1, der zweite Träger 2 und das Gleitstück 4 sind als metallische Gussbauteile ausgebildet.

Der zweite Träger 2 ist über eine erste Feder 8 und eine zweite Feder 9 sowie über ein erstes Drehgelenk 10 federnd und gelenkig mit dem ersten Träger 1 verbunden.

Der Stromabnehmer ist in Fig. 1 in einer ersten Endlage dargestellt, in welcher das Gleitstück 4 zur Stromabnahme und zur Versorgung des Schienenfahrzeugs mit Elektrizität an eine als Stromschiene ausgeführte, in Fig. 1 nicht gezeigte Stromversorgungsvorrichtung angelegt ist.

Die Betätigungsvorrichtung 5 weist einen über ein zweites Drehgelenk 11 gelenkig mit dem ersten Träger 1 verbundenen pneumatischen Aktuator 13 auf, der einen Zylinder 14 und eine Kolbenstange 15 mit einem Kolben 16 aufweist. Erfindungsgemäß ist es auch vorstellbar, dass der Aktuator 13 als hydraulischer oder elektrischer Aktuator etc. ausgeführt ist.

Der Zylinder 14 ist über einen ersten Anschluss 17 und einen zweiten Anschluss 18 sowie in Fig. 1 nicht gezeigte Druckluftleitungen mit Druckluft versorgt, wodurch Bewegungen und Stellungen des Kolbens 16 und der Kolbenstange 15 eingestellt werden.

Die Kolbenstange 15 ist über ein drittes Drehgelenk 12 gelenkig mit einem ersten Hebelarm 19 eines drehbar mit dem ersten Träger 1 verbundenen Kraftübersetzers 21 der Betätigungsvorrichtung 5 gekoppelt.

Eine Aktuatorlängsachse 22 des Aktuators 13 ist in allen Betriebszuständen des Aktuators 13 geneigt bezüglich einer Trägerlängsachse 23 des ersten Trägers 1 ausgerichtet.

Linearbewegungen der Kolbenstange 15 werden in Rotationsbewegungen des Kraftübersetzers 21 umgesetzt.

Der Kraftübersetzer 21 umfasst weiterhin einen zweiten Hebelarm 20, welcher eine von dem ersten Hebelarm 19 verschiedene Winkellage aufweist. An einem Ende des zweiten Hebelarms 20 ist eine Walze 24 drehbar angeordnet. Erfindungsgemäß ist es auch vorstellbar, auf die Walze 24 zu verzichten.

Die Betätigungsvorrichtung 5 weist ferner ein mit dem zweiten Träger 2 verbundenes rampenförmiges Kontaktstück 25 auf, welches in einem Elastomer ausgebildet ist.

Erfindungsgemäß ist es jedoch auch vorstellbar, dass das Kontaktstück 25 einstückig mit dem zweiten Träger 2 ausgeführt ist, d.h. mit diesem einen Materialverbund bildet.

Die Walze 24 ist auf dem Kontaktstück 25 über einen Rollkontakt geführt. Der zweite Hebelarm 20 ist also mittelbar mit dem Kontaktstück 25 verbunden.

Wird auf die Walze 24 verzichtet, so kann zwischen dem zweiten Hebelarm 20 und dem Kontaktstück 25 ein Gleitkontakt vorgesehen sein, d.h. der zweite Hebelarm 20 kann unmittelbar auf dem Kontaktstück 25 geführt sein.

Das Kontaktstück 25 weist in Bezug auf jene Darstellung von Fig. 1 einen horizontalen ersten Abschnitt 26 auf, an diesen anschließend ist ein als ansteigende schiefe Ebene ausgebildeter zweiter Abschnitt 27 vorgesehen, an welchen sich wiederum ein dritter Abschnitt 28 mit einem Gefälle anschließt. In der Darstellung des Stromabnehmers von Fig. 1 ist der erste Abschnitt 26 ist bezüglich des dritten Abschnitts 28 nach unten versetzt.

In Fig. 1 ist die Walze 24 auf dem ersten Abschnitt 26 angeordnet, wobei dies einer Position der Walze 24 entspricht, welche mit der ersten Endlage des Stromabnehmers bzw. des Gleitstücks 4 korreliert.

Der zweite Hebelarm 20 ist in der Darstellung von Fig. 1 um ca. 35 ° in Bezug auf die Trägerlängsachse 23 im Uhrzeigersinn verdreht und weist nach schräg unten. Aus einer ersten Aufstandskraft 29 zwischen der Walze 24 und dem Kontaktstück 25 ist über einen ersten Abstand 31 zwischen einer Wirklinie der ersten Aufstandskraft 29 und einer durch eine Kraftübersetzermitte 33 verlaufende, in Fig. 1 vertikal ausgerichtete Kraftübersetzerachse 34 ein im Uhrzeigersinn wirkendes erstes Drehmoment gebildet, welches einen Widerstand verursacht, welcher eine Rotation des Kraftübersetzers 21 gegen den Uhrzeigersinn verhindert und die Walze 24 auf dem ersten Abschnitt 26 festhält. Dadurch wird die erste Endlage des Gleitstücks 4 sicher gehalten bzw. wird ein unbeabsichtigtes Schwenken des Stromabnehmers in die zweite Endlage verhindert.

Das erste Drehmoment bewirkt eine Endlagensicherung, welche aufgrund der ansteigenden schiefen Ebene des zweiten Abschnitts 27 des Kontaktstücks 25 zusätzlich abgesichert ist.

Der Aktuator 13 ist ausgeschaltet, wenn das Gleitstück 4 in der ersten Endlage ist.

Der Kraftübersetzer 21 kann auch manuell betätigt werden. Auf dem Kraftübersetzer 21 ist ein Sechskant-Anlegestück 35 für einen nicht gezeigten Schraubenschlüssel vorgesehen. Mittels des Schraubenschlüssels ist ein manuelles An- oder Ablegen des Gleitstücks 4 an die oder von der Stromschiene möglich, wodurch ein Notbetrieb des Stromabnehmers ermöglicht wird.

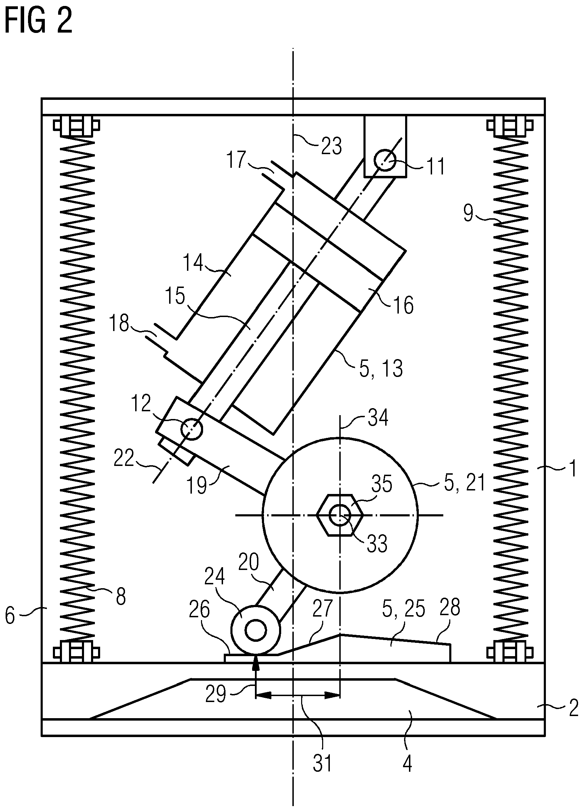

Fig. 2 zeigt eine beispielhafte zweite Ausführungsvariante eines erfindungsgemäßen Stromabnehmers. Diese beispielhafte zweite Ausführungsvariante ähnelt jener ersten Ausführungsvariante, die in Fig. 1 dargestellt ist. Es werden daher in Fig. 2 weitgehend die gleichen Bezugszeichen wie in Fig. 1 verwendet.

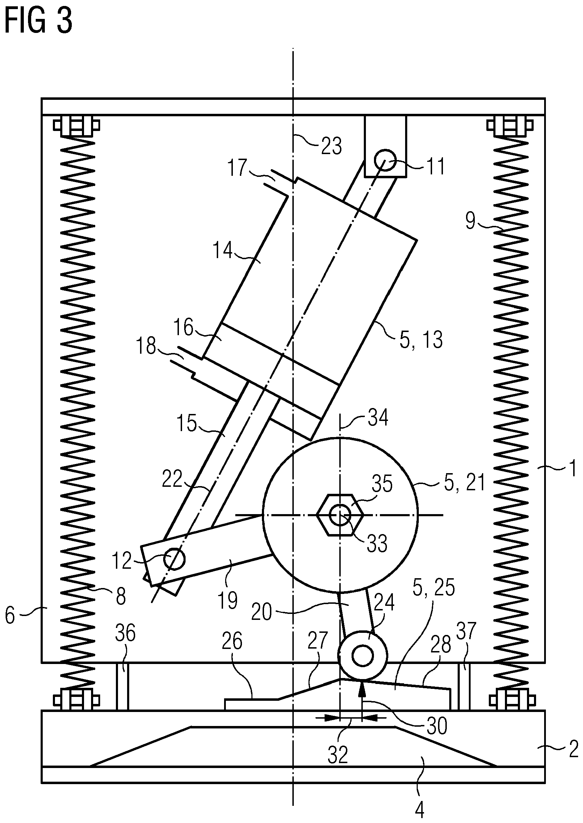

Im Unterschied zu Fig. 1 weist der Stromabnehmer von Fig. 2 zwischen einem ersten Träger 1 und einem zweiten Träger 2 kein erstes Drehgelenk 10, sondern eine mittels eines ersten Führungsbolzens 36 und eines zweiten Führungsbolzens 37, die in Fig. 3 sichtbar sind, realisierte Linearführung auf. Der zweite Träger 2 führt relativ zu dem ersten Träger 1 bei einem Anlegen an oder einem Ablegen von einer Stromschiene keine Schwenkbewegung, sondern eine reine Translationsbewegung aus.

In Fig. 3 ist jene beispielhafte zweite Ausführungsvariante eines erfindungsgemäßen Stromabnehmers als Seitenriss dargestellt, die auch in Fig. 2 gezeigt ist und die jener beispielhaften ersten Ausführungsvariante, die in Fig. 1 offenbart ist, ähnelt. Es werden daher in Fig. 3 weitgehend die gleichen Bezugszeichen wie in Fig. 1 und Fig. 2 verwendet.

Im Unterschied zu Fig. 2, welche eine erste Endlage des Stromabnehmers bzw. eines Gleitstücks 4 offenbart, zeigt Fig. 3 eine zweite Endlage des Stromabnehmers bzw. des Gleitstücks 4, in der das Gleitstück 4 abgesenkt und von einer in Fig. 3 nicht gezeigten Stromschiene getrennt ist.

Der Stromabnehmer weist einen ersten Träger 1 und einen zweiten Träger 2 auf, wobei mit dem zweiten Träger 2 das Gleitstück 4 verbunden ist.

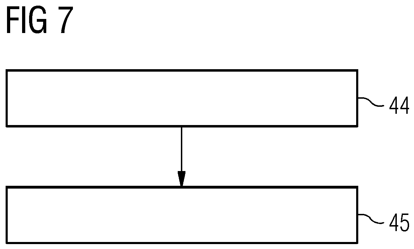

Eine Betätigungsvorrichtung 5 mit einem pneumatischen Aktuator 13, der zur Druckluftversorgung einen ersten Anschluss 17 und einen zweiten Anschluss 18 aufweist, und einem Kraftübersetzer 21 bewirkt Bewegungen des zweiten Trägers 2 und des Gleitstücks 4 zwischen der ersten Endlage und der zweiten Endlage und somit eine Betätigung des Stromabnehmers, wie sie beispielsweise auch im Zusammenhang mit Fig. 7 beschrieben ist.

Aktuatorkräfte wirken über eine Kolbenstange 15 des Aktuators 13 und einen ersten Hebelarm 19 des Kraftübersetzers 21, mit welchem die Kolbenstange 15 verbunden ist, auf einen zweiten Hebelarm 20 des Kraftübersetzers 21 und versetzen den Kraftübersetzer 21 und somit den zweiten Hebelarm 20 in Rotation. Aufgrund dieser Rotation rollt eine mit dem zweiten Hebelarm 20 drehbar verbundene Walze 24 auf einem mit dem zweiten Träger 2 verbundenen Kontaktstück 25 der Betätigungsvorrichtung 5 ab.

Um aus der ersten Endlage die zweite Endlage zu erreichen, wird der Aktuator 13 über den ersten Anschluss 17 mit Druckluft befüllt und über den zweiten Anschluss 18 entlüftet. Dadurch wirkt eine Bewegung der Kolbenstange 15 des Aktuators 13 auf den Kraftübersetzer 21, dieser rotiert in Bezug auf jene Darstellung von Fig. 3 gegen den Uhrzeigersinn und die Walze 24 rollt von einem ersten Abschnitt 26 des Kontaktstücks 25 über einen ansteigenden zweiten Abschnitt 27 des Kontaktstücks 25 auf einen dritten Abschnitt 28 des Kontaktstücks 25, welcher in Bezug auf den ersten Abschnitt 26 nach oben versetzt ist und ein Gefälle aufweist.

Die Walze 24 drückt während ihrer Bewegung auf den dritten Abschnitt 28 auf das Kontaktstück 25 und der zweite Träger 2 lenkt, geführt von einem ersten Führungsbolzen 36 und einem zweiten Führungsbolzen 37 zwischen dem ersten Träger 1 und dem zweiten Träger 2, nach unten aus.

Die zweite Endlage des Gleitstücks 4 ist erreicht, wenn die Walze 24 auf dem dritten Abschnitt 28 angeordnet ist.

Der zweite Hebelarm 20 ist in der Darstellung von Fig. 3 um ca. 10 ° in Bezug auf eine Trägerlängsachse 23 gegen den Uhrzeigersinn verdreht und weist nach schräg unten. Im Unterschied zu jener Lage des zweiten Hebelarms 20, die in Fig. 1 gezeigt ist, in welcher ein aus einer ersten Aufstandskraft 29 und einem ersten Abstand 31 gebildetes erstes Drehmoment auf den Kraftübersetzer 21 wirkt, ist in Fig. 3 aus einer zweiten Aufstandskraft 30 zwischen der Walze 24 und dem Kontaktstück 25 über einen zweiten Abstand 32 zwischen einer Wirklinie der zweiten Aufstandskraft 30 und einer durch eine Kraftübersetzermitte 33 verlaufende, in Fig. 3 vertikal ausgerichtete Kraftübersetzerachse 34 ein gegen den Uhrzeigersinn wirkendes zweites Drehmoment gebildet, welches einen Widerstand verursacht, welcher eine Rotation des Kraftübersetzers 21 im Uhrzeigersinn verhindert und die Walze 24 auf dem dritten Abschnitt 28 festhält. Dadurch wird die zweite Endlage des Gleitstücks 4 sicher gehalten bzw. wird ein unbeabsichtigtes Auslenken des Stromabnehmers in die erste Endlage verhindert.

Das zweite Drehmoment, dessen Wirkrichtung jener des ersten Drehmoments entgegengesetzt ist, bewirkt eine Endlagensicherung, welche aufgrund des Gefälles des dritten Abschnitts 28 des Kontaktstücks 25 zusätzlich verstärkt wird. Der Aktuator 13 ist ausgeschaltet, wenn das Gleitstück 4 in der zweiten Endlage ist.

Um den zweiten Träger 2 mit dem Gleitstück 4 wieder in die erste Endlage zu schwenken bzw. das Gleitstück 4 wieder an die Stromschiene anzulegen, wird der Aktuator 13 über den ersten Anschluss 17 entlüftet und über den zweiten Anschluss 18 mit Druckluft versorgt. Der zweite Träger 2 wird aufgrund von Kräften des Aktuators 13 sowie einer ersten Feder 8 und einer zweiten Feder 9, die zwischen dem ersten Träger 1 und dem zweiten Träger 2 angeordnet sind, wieder, bezüglich der Darstellung von Fig. 3, nach oben geführt. Dabei rotiert der Kraftübersetzer 21 in Bezug auf die Darstellung von Fig. 3 im Uhrzeigersinn und rollt die Walze 24 auf dem Kontaktstück 25 nach links auf den ersten Abschnitt 26, welcher relativ zu dem dritten Abschnitt 28 nach unten versetzt ist.

In Fig. 4 ist, im Unterschied zu Fig. 1, Fig. 2 und Fig. 3, in welchen jeweils eine erste Seite 6 eines ersten Trägers 1 eines Stromabnehmers, eine Vorderseite des Stromabnehmers, dargestellt ist, eine zweite Seite 7 eines ersten Trägers 1, eine Rückseite eines Stromabnehmers, gezeigt.

An der zweiten Seite 7 ist eine Verriegelungseinrichtung einer auch im Zusammenhang mit Fig. 1, Fig. 2 und Fig. 3 beispielhaft beschriebenen Betätigungsvorrichtung 5 des Stromabnehmers vorgesehen.

Die Verriegelungseinrichtung umfasst eine Verriegelungsfeder 38, welche über ihr erstes Ende 39 drehbar mit dem ersten Träger 1 und über ihr zweites Ende 40 drehbar mit einem Exzenter 41 eines im Zusammenhang mit Fig. 1, Fig. 2 und Fig. 3 beispielhaft beschriebenen Kraftübersetzers 21 der Betätigungsvorrichtung 5 verbunden ist. Die Verriegelungsfeder 38 ist also drehbar und versetzt bezüglich einer Kraftübersetzermitte 33 mit dem Kraftübersetzer 21 verbunden.

Der Exzenter 41 ist über eine Öffnung 42 in dem ersten Träger 1 mit dem Kraftübersetzer 21 verbunden und bewegt sich bei einer Rotation des Kraftübersetzers 21 mit diesem mit. Dadurch vollführt das zweite Ende 40 der Verriegelungsfeder 38 bei Rotationsbewegungen des Kraftübersetzers 21 Bewegungen entlang einer Kreisbahn und die Verriegelungsfeder 38 rotiert.

In Fig. 4 weist die Verriegelungsfeder 38 eine Lage auf, welche mit einer im Zusammenhang mit Fig. 1 beschriebenen ersten Endlage des Stromabnehmers bzw. eines Gleitstücks 4 korreliert. Die Verriegelungsfeder 38 weist in dieser Lage eine lediglich geringe Federspannung auf, wodurch der Kraftübersetzer 21 und ein über eine Walze 24 und ein Kontaktstück 25 der Betätigungsvorrichtung 5 mit dem Kraftübersetzer 21 gekoppelter zweiter Träger 2 mit dem Gleitstück 4, die im Zusammenhang mit Fig. 1 und Fig. 3 beispielhaft beschrieben sind, in der ersten Endlage gehalten sind.

Um den Stromabnehmer bzw. das Gleitstück 4 in eine im Zusammenhang mit Fig. 3 beschriebene zweite Endlage überzuführen, führt der Kraftübersetzer 21 eine Drehbewegung aus, wodurch das zweite Ende 40 der Verriegelungsfeder 38 aufgrund des Exzenters 41 entlang der Kreisbahn bewegt wird und die Verriegelungsfeder 38 gespannt wird.

In der ersten Endlage des Stromabnehmers ist die Verriegelungsfeder 38 bezüglich einer in Fig. 4 horizontalen Verriegelungsachse 43 gegen den Uhrzeigersinn verdreht und weist nach schräg unten.

Erfindungsgemäß kann die Verriegelungsachse 43 auch eine andere Ausrichtung aufweisen als eine horizontale.

Rotiert der Kraftübersetzer 21 wie im Zusammenhang mit Fig. 3 beschrieben, so wird die Verriegelungsfeder 38 in Bezug auf jene Ansicht von Fig. 4 im Uhrzeigersinn verdreht.

Wenn die Verriegelungsfeder 38 eine definierte Federauslenkung erreicht und dabei in Bezug auf die Ansicht gemäß Fig. 4 und wie in Fig. 5 dargestellt parallel zu der Verriegelungsachse 43 ausgerichtet ist, erreicht die Verriegelungsfeder 38 ein Spannungsmaximum. Rotiert der Kraftübersetzer 21 weiter, so dass sich die Verriegelungsfeder 38 aus der definierten Federauslenkung weiter im Uhrzeigersinn verdreht, so wird die Federspannung der Verriegelungsfeder 38 verringert.

Ist die Verriegelungsfeder 38 in Bezug auf die Ansicht von Fig. 4 und wie in Fig. 6 dargestellt bezüglich der Verriegelungsachse 43 im Uhrzeigersinn verdreht und weist nach schräg oben, so weist sie eine lediglich geringe Restspannung auf und der Stromabnehmer ist in der zweiten Endlage gehalten.

Um den Stromabnehmer wieder in die erste Endlage überzuführen, rotiert der Kraftübersetzer 21 wie im Zusammenhang mit Fig. 3 beschrieben.

Dabei rotiert die Verriegelungsfeder 38 in Bezug auf die Darstellungen von Fig. 4, Fig. 5 und Fig. 6 gegen den Uhrzeigersinn, wird zunächst gespannt und nach Überschreitung der definierten Federauslenkung mit dem Spannungsmaximum, dessen Lage in Fig. 5 gezeigt ist, wird die Federspannung wieder reduziert. Ist die Verriegelungsfeder 38 bezüglich der Verriegelungsachse 43 gegen den Uhrzeigersinn verdreht und weist schräg nach unten, so ist der Stromabnehmer wieder in seiner ersten Endlage und wird darin gehalten.

Die Verriegelungseinrichtung bewirkt eine redundante Endlagensicherung des Stromabnehmers.

Erfindungsgemäß ist es weiterhin denkbar, dass eine Mehrzahl an Verriegelungsfedern vorgesehen ist, wobei die Verriegelungsfedern unterschiedliche maximale Federspannungen und unterschiedliche definierte Federauslenkungen als Grenzen zwischen Vergrößerung und Verkleinerung der Federspannungen aufweisen können.

Fig. 5 zeigt jene Verriegelungseinrichtung eines erfindungsgemäßen Stromabnehmers als Seitenriss, die auch in Fig. 4 dargestellt ist. Es werden daher in Fig. 5 die gleichen Bezugszeichen wie in Fig. 4 verwendet.

Im Unterschied zu Fig. 4 weist eine Verriegelungsfeder 38 in Fig. 5 eine zu einer Verriegelungsachse 43 parallele Lage und eine definierte Federauslenkung mit einem Spannungsmaximum auf. Diese Lage korreliert mit einer Stellung des Stromabnehmers bzw. eines Gleitstücks 4 zwischen einer ersten Endlage und einer zweiten Endlage, welche im Zusammenhang mit Fig. 1 und Fig. 3 beschrieben sind.

In Fig. 6 ist jene Verriegelungseinrichtung eines erfindungsgemäßen Stromabnehmers als Seitenriss offenbart, die auch in Fig. 4 dargestellt ist. Es werden daher in Fig. 6 die gleichen Bezugszeichen wie in Fig. 4 verwendet.

Im Unterschied zu Fig. 4 weist eine Verriegelungsfeder 38 in Fig. 6 eine bezüglich einer Verriegelungsachse 43 im Uhrzeigersinn verdrehte Lage auf. Diese Lage kann erreicht werden, wenn der Stromabnehmer bzw. ein Gleitstück 4 aus einer ersten Endlage ausgelenkt wird. Die genannte Lage korreliert mit einer Stellung des Stromabnehmers bzw. des Gleitstücks 4 in einer zweiten Endlage, welche im Zusammenhang mit Fig. 3 beschrieben ist.

Fig. 7 zeigt ein Flussdiagramm zu einer beispielhaften Ausführungsvariante eines erfindungsgemäßen Verfahrens zur Betätigung eines Stromabnehmers, wie er beispielsweise in Fig. 1 und Fig. 2 dargestellt ist. Die Betätigung wird mittels einer in Fig. 1, Fig. 2 und Fig. 3 gezeigten Betätigungsvorrichtung 5 und wie im Zusammenhang mit Fig. 3 beschrieben durchgeführt. Die Betätigungsvorrichtung 5 umfasst einen Aktuator 13 mittels welchem ein Gleitstück 4 des Stromabnehmers in eine erste Endlage oder in eine zweite Endlage bewegt wird. Zur Einleitung und Umsetzung einer Bewegung des Gleitstücks 4 in die erste Endlage oder in die zweite Endlage wird der Aktuator 13 eingeschaltet (Einschaltschritt 44).

Der Aktuator 13 wird ausgeschaltet (Ausschaltschritt 45), wenn das Gleitstück 4 in der ersten Endlage oder in der zweiten Endlage angeordnet und darin mittels im Zusammenhang mit Fig. 1, Fig. 2, Fig. 3, Fig. 4, Fig. 5 und Fig. 6 beschriebenen Endlagensicherungen gesichert gehalten ist.

### Liste der Bezeichnungen

- 1: Erster Träger
- 2: Zweiter Träger
- 3: Fahrwerksrahmen
- 4: Gleitstück
- 5: Betätigungsvorrichtung
- 6: Erste Seite
- 7: Zweite Seite
- 8: Erste Feder
- 9: Zweite Feder
- 10: Erstes Drehgelenk
- 11: Zweites Drehgelenk
- 12: Drittes Drehgelenk
- 13: Aktuator
- 14: Zylinder
- 15: Kolbenstange
- 16: Kolben
- 17: Erster Anschluss
- 18: Zweiter Anschluss
- 19: Erster Hebelarm
- 20: Zweiter Hebelarm
- 21: Kraftübersetzer
- 22: Aktuatorlängsachse
- 23: Trägerlängsachse
- 24: Walze
- 25: Kontaktstück
- 26: Erster Abschnitt
- 27: Zweiter Abschnitt
- 28: Dritter Abschnitt
- 29: Erste Aufstandskraft
- 30: Zweite Aufstandskraft
- 31: Erster Abstand
- 32: Zweiter Abstand
- 33: Kraftübersetzermitte
- 34: Kraftübersetzerachse
- 35: Sechskant-Anlegestück
- 36: Erster Führungsbolzen
- 37: Zweiter Führungsbolzen
- 38: Verriegelungsfeder
- 39: Erstes Ende
- 40: Zweites Ende
- 41: Exzenter
- 42: Öffnung
- 43: Verriegelungsachse
- 44: Einschaltschritt
- 45: Ausschaltschritt

## Patentansprüche

1. Stromabnehmer für ein Fahrzeug, insbesondere für ein Schienenfahrzeug, mit einer Betätigungsvorrichtung (5), mit einem mit einem Fahrzeug verbindbaren ersten Träger (1) sowie mit einem zwischen einer ersten Endlage und einer zweiten Endlage eines Gleitstücks (4) beweglich mit dem ersten Träger (1) verbundenen zweiten Träger (2), mit welchem das Gleitstück (4) verbunden ist, wobei die Betätigungsvorrichtung (5) einen mit dem ersten Träger (1) verbundenen Aktuator (13), einen mit dem ersten Träger (1) verbundenen Kraftübersetzer (21), mit welchem der Aktuator (13) gekoppelt ist, sowie ein mit dem zweiten Träger (2) verbundenes Kontaktstück (25) aufweist, auf welchem der Kraftübersetzer (21) geführt ist, wobei das Gleitstück (4) mittels eines auf den Kraftübersetzer (21) wirkenden ersten Drehmoments, welches aus einer ersten Aufstandskraft (29) zwischen dem Kraftübersetzer (21) und dem Kontaktstück (25) gebildet ist, in der ersten Endlage gesichert gehalten ist, wobei das erste Drehmoment gegen eine Bewegung des Gleitstücks (4) aus der ersten Endlage wirkend ausgebildet ist, **dadurch gekennzeichnet, dass** zumindest eine Verriegelungsfeder (38) mit dem Kraftübersetzer (21) sowie mit dem ersten Träger (1) verbunden ist, wobei die zumindest eine Verriegelungsfeder (38) und der Kraftübersetzer (21) in einer Weise eingestellt sind, dass bei Bewegung des Kraftübersetzers (21) eine Federspannung der zumindest einen Verriegelungsfeder (38) zuerst vergrößert wird und dann, wenn eine definierte Federauslenkung der Verriegelungsfeder (38) erreicht ist, verkleinert wird, wenn das Gleitstück (4) von der ersten Endlage in die zweite Endlage oder von der zweiten Endlage in die erste Endlage bewegt wird.

2. Stromabnehmer nach Anspruch 1, **dadurch gekennzeichnet, dass** das Gleitstück (4) mittels eines auf den Kraftübersetzer (21) wirkenden zweiten Drehmoments, welches aus einer zweiten Aufstandskraft (30) zwischen dem Kraftübersetzer (21) und dem Kontaktstück (25) gebildet ist, in der zweiten Endlage gesichert gehalten ist, wobei das zweite Drehmoment gegen eine Bewegung des Gleitstücks (4) aus der zweiten Endlage wirkend ausgebildet ist und das zweite Drehmoment eine Wirkrichtung aufweist, die jener des ersten Drehmoments entgegengesetzt ist.

3. Stromabnehmer nach Anspruch 1 oder 2, **dadurch gekennzeichnet, dass** der Kraftübersetzer (21) drehbar mit dem ersten Träger (1) verbunden ist.

4. Stromabnehmer nach einem der Ansprüche 1 bis 3, **dadurch gekennzeichnet, dass** die zumindest eine Verriegelungsfeder (38) drehbar und versetzt bezüglich einer Kraftübersetzermitte (33) mit dem Kraftübersetzer (21) sowie drehbar mit dem ersten Träger (1) verbunden ist.

5. Stromabnehmer nach einem der Ansprüche 1 bis 4, **dadurch gekennzeichnet, dass** der Kraftübersetzer (21) auf einer ersten Seite (6) des ersten Trägers (1) vorgesehen ist und die zumindest eine Verriegelungsfeder (38) auf einer der ersten Seite (6) gegenüberliegend angeordneten zweiten Seite (7) des ersten Trägers (1) vorgesehen ist, wobei der Kraftübersetzer (21) und die zumindest eine Verriegelungsfeder (38) über eine Öffnung (42) des ersten Trägers (1) miteinander verbunden sind.

6. Stromabnehmer nach einem der Ansprüche 1 bis 5, **dadurch gekennzeichnet, dass** der Kraftübersetzer (21) einen ersten Hebelarm (19) und einen zweiten Hebelarm (20), welche verschiedene Winkellagen aufweisen, umfasst, wobei der erste Hebelarm (19) mit dem Aktuator (13) verbunden ist und der zweite Hebelarm (20) auf dem Kontaktstück (25) geführt ist.

7. Stromabnehmer nach Anspruch 6, **dadurch gekennzeichnet, dass** mit dem zweiten Hebelarm (20) eine Walze (24) verbunden ist, welche das Kontaktstück (25) kontaktiert.

8. Stromabnehmer nach Anspruch 6 oder 7, **dadurch gekennzeichnet, dass** der Aktuator (13) gelenkig mit dem ersten Träger (1) und gelenkig mit dem ersten Hebelarm (19) verbunden ist.

9. Stromabnehmer nach einem der Ansprüche 1 bis 8, **dadurch gekennzeichnet, dass** das Kontaktstück (25) zumindest einen rampenförmigen Abschnitt umfasst.

10. Stromabnehmer nach einem der Ansprüche 1 bis 9, **dadurch gekennzeichnet, dass** der Kraftübersetzer (21) manuell betätigbar ausgeführt ist.

11. Stromabnehmer nach einem der Ansprüche 1 bis 10, **dadurch gekennzeichnet, dass** eine Aktuatorlängsachse (22) des Aktuators (13) in allen Betriebszuständen des Aktuators (13) geneigt bezüglich einer Trägerlängsachse (23) des ersten Trägers (1) ausgerichtet ist.

12. Stromabnehmer nach einem der Ansprüche 1 bis 11, **dadurch gekennzeichnet, dass** der erste Träger (1) und der zweite Träger (2) gelenkig miteinander verbunden sind.

13. Stromabnehmer nach einem der Ansprüche 1 bis 12, **dadurch gekennzeichnet, dass** der erste Träger (1) und der zweite Träger (2) federnd miteinander verbunden sind.

14. Verfahren zur Betätigung eines Stromabnehmers nach einem der Ansprüche 1 bis 13 mittels eines Aktuators (13), wobei mittels des Aktuators (13) ein Gleitstück (4) in eine erste Endlage oder in eine zweite Endlage bewegt wird, **dadurch gekennzeichnet, dass** der Aktuator (13) ausgeschaltet wird, wenn das Gleitstück (4) in der ersten Endlage oder in der zweiten Endlage angeordnet und darin gesichert gehalten ist.

## Claims

1. Current collector for a vehicle, in particular for a rail vehicle, having an actuation apparatus (5), having a first support (1) which can be connected to a vehicle and having a second support (2) which is movably connected to the first support (1) between a first end position and a second end position of a sliding block (4), to which second support the sliding block (4) is connected, wherein the actuation apparatus (5) has an actuator (13) connected to the first support (1), a power transmitter (21) connected to the first support (1), to which power transmitter the actuator (13) is coupled, and a contact piece (25) connected to the second support (2), on which contact piece the force transmitter (21) is guided, wherein the sliding block (4) is held secured in the first end position by means of a first torque acting on the force transmitter (21), said first torque being formed from a first contact force (29) between the force transmitter (21) and the contact piece (25), wherein the first torque is embodied to act against a movement of the sliding block (4) out of the first end position, **characterised in that** at least one locking spring (38) is connected to the force transmitter (21) and to the first support (1), wherein the at least one locking spring (38) and the force transmitter (21) are adjusted in such a way that with a movement of the force transmitter (21) a spring tension of the at least one locking spring (38) is firstly increased and then when a defined spring deflection of the locking spring (38) is reached, is decreased when the sliding block (4) is moved from the first end position into the second end position or from the second end position into the first end position.

2. Current collector according to claim 1, **characterised in that** the sliding block (4) is held secured in the second end position by means of a second torque acting on the force transmitter (21), which second torque is formed from a second contact force (30) between the force transmitter (21) and the contact piece (25), wherein the second torque is embodied to act against a movement of the sliding piece (4) from the second end position and the second torque has an effective direction which opposes that of the first torque.

3. Current collector according to claim 1 or 2,
**characterised in that** the force transmitter (21) is connected in a rotatable manner with the first support (1).

4. Current collector according to one of claims 1 to 3,
**characterised in that** the at least one locking spring (38) is connected to the force transmitter (21) in a rotatable and offset manner with respect to a force transmitter centre (33) and in a rotatable manner with the first support (1).

5. Current collector according to one of claims 1 to 4, **characterised in that** the force transmitter (21) is provided on a first side (6) of the first support (1) and the at least one locking spring (38) is provided on a second side (7) of the first support (1) arranged facing the first side (6), wherein the force transmitter (21) and the at least one locking spring (38) are connected to one another by way of an opening (42) of the first support (1).

6. Current collector according to one of claims 1 to 5, **characterised in that** the force transmitter (21) comprises a first lever arm (19) and a second lever arm (20), which have different angular positions, wherein the first lever arm (19) is connected to the actuator (13) and the second lever arm (20) is guided on the contact piece (25).

7. Current collector according to claim 6, **characterised in that** a roller (24) which makes contact with the contact piece (25) is connected to the second lever arm (20).

8. Current collector according to claim 6 or 7,
**characterised in that** the actuator (13) is connected in a hinged manner with the first support (1) and in a hinged manner with the first lever arm (19).

9. Current collector according to one of claims 1 to 8, **characterised in that** the contact piece (25) comprises at least one ramp-shaped section.

10. Current collector according to one of claims 1 to 9, **characterised in that** the force transmitter (21) is designed to be manually actuatable.

11. Current collector according to one of claims 1 to 10, **characterised in that** an actuator longitudinal axis (22) of the actuator (13) is aligned at an incline with respect to a support longitudinal axis (23) of the first support (1) in all operating states of the actuator (13).

12. Current collector according to one of claims 1 to 11, **characterised in that** the first support (1) and the second support (2) are connected to one another in a hinged manner.

13. Current collector according to one of claims 1 to 12, **characterised in that** the first support (1) and the second support (2) are connected in a resilient manner to one another.

14. Method for actuating a current collector according to one of claims 1 to 13 by means of an actuator (13), wherein by means of the actuator (13) a sliding block (4) is moved into a first end position or into a second end position,
**characterised in that** the actuator (13) is switched off if the sliding block (4) is arranged in the first end position or in the second end position and is held secured therein.

## Revendications

1. Collecteur de courant pour un véhicule, en particulier pour un véhicule ferroviaire, comprenant un dispositif d'actionnement (5)avec un premier support (1) pouvant être relié à un véhicule, ainsi qu'un deuxième support (2), auquel le coulisseau (4) est relié, relié de manière mobile au premier support (1) entre une première position d'extrémité et une seconde position d'extrémité d'un coulisseau (4), dans lequel le dispositif d'actionnement (5) présente un actionneur (13) relié au premier support (1), un convertisseur de force (21) relié au premier support (1), auquel l'actionneur (13) est couplé, ainsi qu'une pièce de contact (25) reliée au deuxième support (2), sur laquelle le convertisseur de force (21) est guidé, dans lequel le coulisseau (4) est maintenu bloqué dans la première position d'extrémité au moyen d'un premier couple agissant sur le convertisseur de force (21), qui est formé d'une première force d'appui (29) entre le convertisseur de force (21) et la pièce de contact (25), dans lequel le premier couple est conçu pour agir à l'encontre d'un déplacement du coulisseau (4) en dehors de la première position d'extrémité, **caractérisé en ce qu'**au moins un ressort de verrouillage (38) est relié au convertisseur de force (21) ainsi qu'au premier support (1), dans lequel le au moins un ressort de verrouillage (38) et le convertisseur de force (21) sont réglés de telle sorte que, lors d'un déplacement du convertisseur de force (21), une tension de ressort du au moins un ressort de verrouillage (38) est d'abord augmentée et est ensuite réduite lorsqu'une déformation de ressort définie du ressort de verrouillage (38) est atteinte, lorsque le coulisseau (4) est déplacé de la première position d'extrémité à la seconde position d'extrémité ou de la seconde position d'extrémité à la première position d'extrémité.

2. Collecteur de courant selon la revendication 1, **caractérisé en ce que** le coulisseau (4) est maintenu bloqué dans la seconde position d'extrémité au moyen d'un deuxième couple agissant sur le convertisseur de force (21), qui est formé d'une seconde force d'appui (30) entre le convertisseur de force (21) et la pièce de contact (25), dans lequel le deuxième couple est conçu pour agir à l'encontre d'un déplacement du coulisseau (4) à partir de la seconde position d'extrémité et le deuxième couple présente une direction d'action qui est opposée à celle du premier couple.

3. Collecteur de courant selon la revendication 1 ou 2, **caractérisé en ce que** le convertisseur de force (21) est relié de manière rotative au premier support (1).

4. Collecteur de courant selon l'une quelconque des revendications 1 à 3, **caractérisé en ce que** le au moins un ressort de verrouillage (38) est relié de manière rotative au convertisseur de force (21) et de manière à être décalé par rapport à un centre de convertisseur de force (33), ainsi que de manière rotative au premier support (1).

5. Collecteur de courant selon l'une quelconque des revendications 1 à 4, **caractérisé en ce que** le convertisseur de force (21) est prévu sur un premier côté (6) du premier support (1) et le au moins un ressort de verrouillage (38) est prévu sur un deuxième côté (7) du premier support (1) agencé à l'opposé du premier côté (6), dans lequel le convertisseur de force (21) et le au moins un ressort de verrouillage (38) sont reliés l'un à l'autre par une ouverture (42) du premier support (1).

6. Collecteur de courant selon l'une quelconque des revendications 1 à 5, **caractérisé en ce que** le convertisseur de force (21) comprend un premier bras de levier (19) et un deuxième bras de levier (20) qui présentent différentes positions angulaires, dans lequel le premier bras de levier (19) est relié à l'actionneur (13) et le deuxième bras de levier (20) est guidé sur la pièce de contact (25).

7. Collecteur de courant selon la revendication 6, **caractérisé en ce qu'**un rouleau (24) qui vient en contact avec la pièce de contact (25) est relié au second bras de levier (20).

8. Collecteur de courant selon la revendication 6 ou 7, **caractérisé en ce que** l'actionneur (13) est relié de manière articulée au premier support (1) et de manière articulée au premier bras de levier (19).

9. Collecteur de courant selon l'une quelconque des revendications 1 à 8, **caractérisé en ce que** la pièce de contact (25) comprend au moins une section en forme de rampe.

10. Collecteur de courant selon l'une quelconque des revendications 1 à 9, **caractérisé en ce que** le convertisseur de force (21) est réalisé pouvant être actionné manuellement.

11. Collecteur de courant selon l'une quelconque des revendications 1 à 10, **caractérisé en ce qu'**un axe longitudinal d'actionneur (22) de l'actionneur (13) est orienté de manière inclinée par rapport à un axe longitudinal de support (23) du premier support (1) dans tous les états de fonctionnement de l'actionneur (13).

12. Collecteur de courant selon l'une quelconque des revendications 1 à 11, **caractérisé en ce que** le premier support (1) et le deuxième support (2) sont reliés l'un à l'autre de manière articulée.

13. Collecteur de courant selon l'une quelconque des revendications 1 à 12, **caractérisé en ce que** le premier support (1) et le deuxième support (2) sont reliés l'un à l'autre par un ressort.

14. Procédé d'actionnement d'un collecteur de courant selon l'une quelconque des revendications 1 à 13 au moyen d'un actionneur (13), dans lequel un coulisseau (4) est déplacé dans une première position d'extrémité ou dans une seconde position d'extrémité au moyen de l'actionneur (13), **caractérisé en ce que** l'actionneur (13) est mis hors tension lorsque le coulisseau (4) est agencé dans la première position d'extrémité ou dans la seconde position d'extrémité et y est maintenu bloqué.
